# EUROPEAN PATENT APPLICATION

(11) **EP 4 682 033 A1**
(43) Date of publication of application: **21.01.2026**
(21) Application number: 25190183.1
(22) Date of filing: 17.07.2025
(51) Int. Cl.: B62J 11/00, B62K 13/08, B62K 3/04, B62K 3/06, B62K 19/40, B62J 7/02, B62J 7/08, B62J 7/04, B62K 19/30, B62K 19/32, B62K 21/06, B62K 25/02, B62M 6/90, B62M 9/125

(54) **SPORT UTILITY BICYCLE**

(30) Priority: 18.07.2024 US 202463673077 P
(71) Applicant: Trek Bicycle Corporation, Waterloo, WI 53594 (US)
(72) Inventor: SONNEVELD, Pieter, Harderwijk (NL); BOTH, Leander, Ulrecht (NL); KÜNZEL, Gernot, Amsterdam (NL)
(74) Representative: J A Kemp LLP

(57) **Abstract**

A sport utility bicycle includes a frame that includes a down tube, a seat tube, and a head tube. The bicycle also includes a detachable accessory bar (200) that mounts between the seat tube and the down tube or the head tube. The detachable accessory bar includes a rear decoupling unit (423) that mounts to the seat tube and a front decoupling unit (412) that mounts to the down tube or the head tube. The detachable accessory bar also includes a bar (405) with a plurality of slots (445) sized to receive straps (450) for securing accessories to the detachable accessory bar.

## Description

### CROSS-REFERENCE TO RELATED APPLICATION

The present application claims the priority benefit of U.S. Provisional Patent App. No. 63/673,077 filed on July 18, 2024, the entire disclosure of which is incorporated herein by reference.

### BACKGROUND

An electric bicycle (or e-bike) refers to a bicycle that is equipped with an electric motor. In modern e-bikes, the electric motor is often mounted within one of the tubes that form the frame of the bicycle. The electric motor is typically powered by a rechargeable battery that can be recharged via power received through an electrical outlet or as a result of a user operating the pedals of the bicycle. In operation, the electric motor acts to assist the user with pedaling of the bicycle. In many e-bikes, the amount of assistance provided by the electric motor can be controlled by the user.

### SUMMARY

An illustrative sport utility bicycle includes a frame that includes a down tube (and/or a head tube) and a seat tube. The bicycle also includes a detachable accessory bar that mounts between the down tube and the seat tube. The detachable accessory bar includes a rear decoupling unit that mounts to the seat tube and a front decoupling unit that mounts to the down tube or the head tube. The detachable accessory bar also includes a bar with a plurality of slots sized to receive straps for securing accessories to the detachable accessory bar.

In an illustrative embodiment, the front decoupling unit includes a first front decoupler riser corresponding to a first bicycle frame, and a second front decoupler riser corresponding to a second bicycle frame, where the second bicycle frame is larger than the first bicycle frame. In another embodiment, the front decoupling unit includes a front decoupler that mounts to the down tube via one or more threaded fasteners, and the front decoupler is made from a flexible material. In another embodiment, the bar mounts to the front decoupler such that the bar is able to pivot relative to the front decoupling unit.

In another embodiment, the rear decoupling unit includes a collar that mounts around the seat tube. In another embodiment, the collar includes an extension that receives a portion of a rear decoupler such that the rear decoupler is able to pivot relative to the collar. In another embodiment, the rear decoupling unit includes a flip chip, where a first mounting position of the flip chip results in a first length of the detachable accessory bar corresponding to a first size of bicycle frame, and a second mounting position of the flip chip results in a second length of the detachable accessory bar corresponding to a second size of bicycle frame.

In another embodiment, a bottom of the detachable accessory bar includes a groove that is sized to receive winged nuts such that one or more fasteners can be used to secure an accessory to the detachable accessory bar. In another embodiment, at least a portion of the rear decoupling unit is made from a flexible material. In another embodiment, the front decoupling unit includes a position pin that extends from a bottom thereof, and the down tube includes an opening sized to receive the position pin. In another embodiment, there is a cover that mounts to the detachable accessory bar, where the cover has an appearance that matches the down tube of the bicycle.

In another embodiment, the frame includes a head tube, and the bicycle further includes a cable routing collar mounted within the head tube. In one embodiment, at least a portion of the cable routing collar surrounds a steerer tube that is positioned within the head tube. In another embodiment, a portion of the cable routing collar is pressed into a bearing cup, and the bearing cup includes an opening to receive cables. In another embodiment, the opening in the bearing cup is part of a cavity that allows the cables to run through the bearing cup without contacting bearings. In another embodiment, the cable routing collar includes a pair of cable tracks to guide one or more cables around the head tube and into the down tube. In another embodiment, the cable tracks are curved along their length to provide a ramp for the one or more cables. In another embodiment, the cable routing collar includes a cable divider that divides cables into right cables and left cables.

In one embodiment, the down tube is hexagonal, the down tube includes a cavity sized to receive a battery, and the cavity is angled relative to a vertical line that extends through a center of the down tube when the bicycle is in an upright position. In an illustrative embodiment, the cavity is angled at 42 degrees relative to the vertical line such that a trajectory of a battery exiting the cavity is also 42 degrees relative to the vertical line. In alternative embodiments, a different angle may be used, such as 38 degrees, 40 degrees, 45 degrees, 48 degrees, etc. In one embodiment, interior corners of the cavity are rounded, and the interior corners are reinforced relative to a remainder of the cavity. Another embodiment includes a first cable channel and a second cable channel within the down tube and adjacent to the cavity. In another embodiment, a portion of a wall that forms the cavity includes a kink to maintain a battery within the cavity.

An illustrative method of forming a detachable accessory bar for a bicycle includes mounting a front decoupling unit to a first end of an accessory bar, where the front decoupling unit is configured to mount to a down tube or a head tube of a bicycle frame. The method also includes mounting a rear decoupling unit to a second end of the accessory bar, where the rear decoupling unit is configured to mount to a seat tube of the bicycle frame.

The method can also include forming a plurality of slots that extend laterally through the accessory bar, where the slots are sized to receive straps for securing accessories to the accessory bar. The method can further include forming a groove in a bottom of the accessory bar, where the groove is sized to receive winged nuts such that one or more fasteners can be used to secure an accessory to the accessory bar. The method can include mounting one or more winged nuts within the groove such that the one or more winged nuts are able to slide along the groove. The method can also include forming a cover that mounts to the detachable accessory bar, where the cover has an appearance that matches a down tube of the bicycle frame. In another embodiment, the rear decoupling unit includes a flip chip, and the method further comprises positioning the flip chip at a first mounting position that results in a first length of the detachable accessory bar corresponding to a first size of bicycle frame or positioning the flip chip at a second mounting position that results in a second length of the detachable accessory bar corresponding to a second size of bicycle frame.

Other principal features and advantages of the invention will become apparent to those skilled in the art upon review of the following drawings, the detailed description, and the appended claims.

### BRIEF DESCRIPTION OF THE DRAWINGS

Illustrative embodiments will hereafter be described with reference to the accompanying drawings, wherein like numerals denote like elements. The foregoing and other features of the present disclosure will become more fully apparent from the following description and appended claims, taken in conjunction with the accompanying drawings. Understanding that these drawings depict only several embodiments in accordance with the disclosure and are, therefore, not to be considered limiting of its scope, the disclosure will be described with additional specificity and detail through use of the accompanying drawings.
Fig. 1 depicts an electric bicycle in accordance with an illustrative embodiment.
Fig. 2A is a side perspective view of a sports utility bicycle with various improvements in accordance with an illustrative embodiment.
Fig. 2B is a top perspective view of the sports utility bicycle of Fig. 2A in accordance with an illustrative embodiment.
Fig. 2C is a rear perspective view of the sports utility bicycle of Fig. 2A in accordance with an illustrative embodiment.
Fig. 3A is a side view of a bicycle having a detachable accessory bar mounted thereto in accordance with an illustrative embodiment.
Fig. 3B is a top view of the bicycle having the detachable accessory bar mounted thereto in accordance with an illustrative embodiment.
Fig. 3C is a side view of the bicycle having the detachable accessory bar removed therefrom in accordance with an illustrative embodiment.
Fig. 4A is an exploded view depicting components of the detachable accessory bar in accordance with an illustrative embodiment.
Fig. 4B is a close up view of the detachable accessory bar 200 mounted to the seat tube of a bicycle frame in accordance with an illustrative embodiment.
Fig. 4C is an end cross-sectional view of a rear end of the detachable accessory bar in accordance with an illustrative embodiment.
Fig. 4D is a close up view of the detachable accessory bar mounted to the head tube of a bicycle frame in accordance with an illustrative embodiment.
Fig. 4E is an end cross-sectional view of a front end of the detachable accessory bar in accordance with an illustrative embodiment.
Fig. 4F is a side cross-sectional view of the rear decoupling unit mounted to a seat tube in accordance with an illustrative embodiment.
Fig. 4G is a side cross-sectional view of the front decoupling unit mounted to a head tube in accordance with an illustrative embodiment.
Fig. 4H is a close-up view of a head tube of a bicycle frame with a detachable accessory bar mounted thereto in accordance with an illustrative embodiment.
Fig. 4I is a close-up view of the head tube of the bicycle frame with the detachable accessory bar removed from the frame in accordance with an illustrative embodiment.
Fig. 4J is a close-up view of a seat tube of a bicycle frame with a detachable accessory bar mounted thereto in accordance with an illustrative embodiment.
Fig. 4K is a close-up view of the seat tube of the bicycle frame with the detachable accessory bar removed from the frame in accordance with an illustrative embodiment.
Fig. 4L is a side view of the front decoupling unit in accordance with an illustrative embodiment.
Fig. 4M (upper) shows the detachable accessory bar configured for a large bicycle frame and (lower) the detachable accessory bar configured for a small bicycle frame in accordance with an illustrative embodiment.
Fig. 4N is a close-up depicting the rear decoupler flip chip in a first (compressed) position for a smaller bicycle frame (left image) and in a second (extended) position for a larger bicycle frame (right image) in accordance with an illustrative embodiment.
Fig. 4O is a side view of a mounted detachable accessory bar with side slots in accordance with an illustrative embodiment.
Fig. 4P is a close-up view of the side slots in the detachable accessory bar in accordance with an illustrative embodiment.
Fig. 4Q is a bottom perspective view of a mounted detachable accessory bar showing a bottom groove in accordance with an illustrative embodiment.
Fig. 4R is a close-up view depicting fasteners that mate with nuts embedded within the accessory bar in accordance with an illustrative embodiment.
Fig. 5A is a side view of an assembled split dropout in accordance with an illustrative embodiment.
Fig. 5B is a rear view of an assembled split dropout in accordance with an illustrative embodiment.
Fig. 5C is a rear view of the split dropout with a mounted axle in accordance with an illustrative embodiment.
Fig. 5D is a rear view of the split dropout showing the formed opening that allows for a looped belt or chain to be mounted in accordance with an illustrative embodiment.
Fig. 5E is rear perspective exploded view of the split dropout in accordance with an illustrative embodiment.
Fig. 5F is a rear exploded view of the split dropout in accordance with an illustrative embodiment.
Fig. 6A is a partial cross-sectional view depicting a cable routing collar in accordance with an illustrative embodiment.
Fig. 6B is a perspective view of the cable routing collar mounted to a steerer tube in accordance with an illustrative embodiment.
Fig. 6C is a side view of the cable routing collar in accordance with an illustrative embodiment.
Fig. 6D is a rear view of the cable routing collar in accordance with an illustrative embodiment.
Fig. 6E is a cross-sectional side view of a mounted cable routing collar in accordance with an illustrative embodiment.
Fig. 6F is a perspective view of the cable routing collar mounted within a head tube in accordance with an illustrative embodiment.
Fig. 6G is a cross-sectional perspective view of the cable mounting collar 600 in accordance with an illustrative embodiment.
Fig. 6H is a cross-sectional plan view of a mounted cable routing collar in accordance with an illustrative embodiment.
Fig. 7A is a side view of a rack wing mounted to a bicycle in accordance with an illustrative embodiment.
Fig. 7B is a side view of the rack wing with a pair of water bottle accessories mounted thereto in accordance with an illustrative embodiment.
Fig. 7C is a rear view showing panniers mounted to a pair of rack wings 700 in accordance with an illustrative embodiment.
Fig. 7D is an inside view depicting the interaction of pannier buckles with the rack wings in accordance with an illustrative embodiment.
Fig. 8A is a first side view of a bicycle with an angled battery ejection system in accordance with an illustrative embodiment.
Fig. 8B is a plan view of the bicycle with the angled battery ejection system in accordance with an illustrative embodiment.
Fig. 8C is a second side view of the bicycle with the angled battery ejection system in accordance with an illustrative embodiment.
Fig. 8D is a view of the opening in the down tube in accordance with an illustrative embodiment.
Fig. 8E is an end view of the opening in the down tube with a battery mounted therein in accordance with an illustrative embodiment.
Fig. 8F is an end view of the opening in the down tube that depicts the reinforced corners in accordance with an illustrative embodiment.
Fig. 8G is an end view of the opening in the down tube that depicts how the edges of the down tube that form the opening are angled in accordance with an illustrative embodiment.

### DETAILED DESCRIPTION

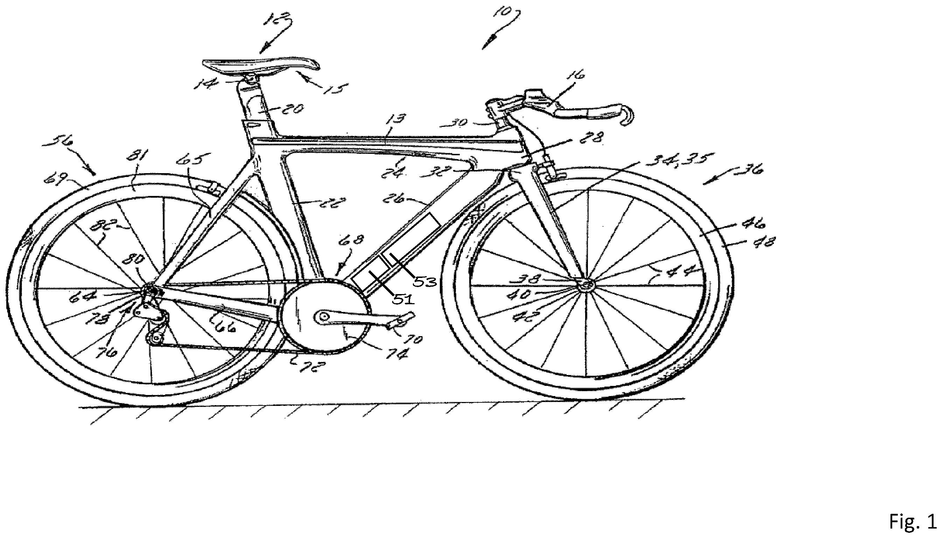

Described herein are various systems that can be incorporated into a sports utility bicycle. The sports utility bicycle can be an electric bicycle in one embodiment. Additionally, many of the systems described herein can be utilized on a non-electric bicycle. Fig. 1 depicts a bicycle 10 in accordance with an illustrative embodiment. The bicycle 10 includes a frame 13 to which a seat assembly 12 and handlebars 16 are attached. A seat clamp 14 is engaged with an underside 15 of seat assembly 12 and cooperates with a dropper post assembly 20 that slidably engages a seat tube 22 of frame 13. The dropper post assembly 20 enables manual or automated low noise adjustment of the seat height. A top tube 24 and a down tube 26 extend forwardly from seat tube 22 to a head tube 28 of frame 13.

Handlebars 16 of the bicycle 10 are connected to a steerer tube 30 that passes through head tube 28 and engages a fork crown 32. A pair of fork blades 34, 35 extend from generally opposite ends of fork crown 32 and are constructed to support a front wheel assembly 36 at an end thereof or fork tip 38. The fork blades 34, 35 can be part of a suspension bicycle fork or a rigid bicycle fork. As also shown in Fig. 1, fork tips 38 engage generally opposite sides of an axle 40 that is constructed to engage a hub 42 of front wheel assembly 36. A number of spokes 44 extend from hub 42 to a rim 46 of front wheel assembly 36. A tire 48 is engaged with rim 46 such that rotation of tire 48, relative to forks 34, rotates rim 46 and hub 42.

A rear wheel assembly 56 is positioned generally concentrically about a rear axle 64. A seat stay 65 and a chain stay 66 offset rear axle 64 from a crankset 68. The crankset 68 includes pedals 70 that are operationally connected to a flexible drive such as a chain 72 via a chain ring or sprocket 74. Rotation of the chain 72 communicates a drive force to a rear section 76 of the bicycle 10 having a gear cluster 78 positioned thereat. The gear cluster 78 is generally concentrically orientated with respect to the rear axle 64 and includes a number of variable diameter gears. The gear cluster 78 is operationally connected to a hub 80 associated with a rear tire 69 of rear wheel assembly 56. A number of spokes 82 extend radially between the hub 80 and a rim 81 that supports tire 69 of rear wheel assembly 56. As is commonly understood, rider operation of the pedals 70 drives the chain 72 thereby driving the rear tire 69 which in turn propels the bicycle 10.

The bicycle 10 of Fig. 1 is an e-bike and also includes an electric motor 51, and a battery 53 that is used to power the electric motor 51. As shown, both the electric motor 51 and the battery 53 are mounted within the down tube 26 of the electric bicycle 10. In alternative embodiments, the electric motor 51 and/or battery 53 can be mounted in a different tube e.g., tope tube 24 or seat tube 22). Alternatively, the electric motor 51 and/or the battery 53 can be mounted external to the frame of the electric bicycle 10. Various additions and improvements to the bicycle 10 are described in more detail below.

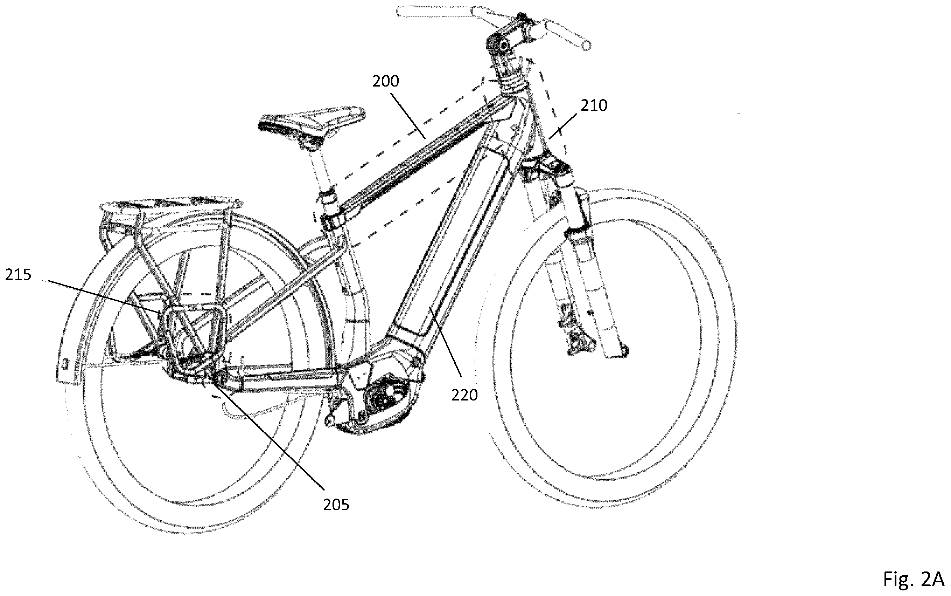

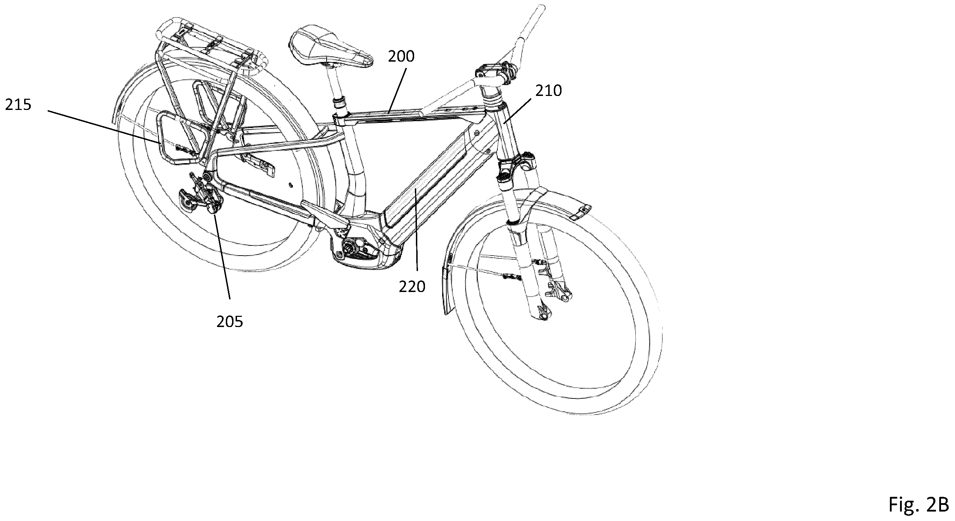

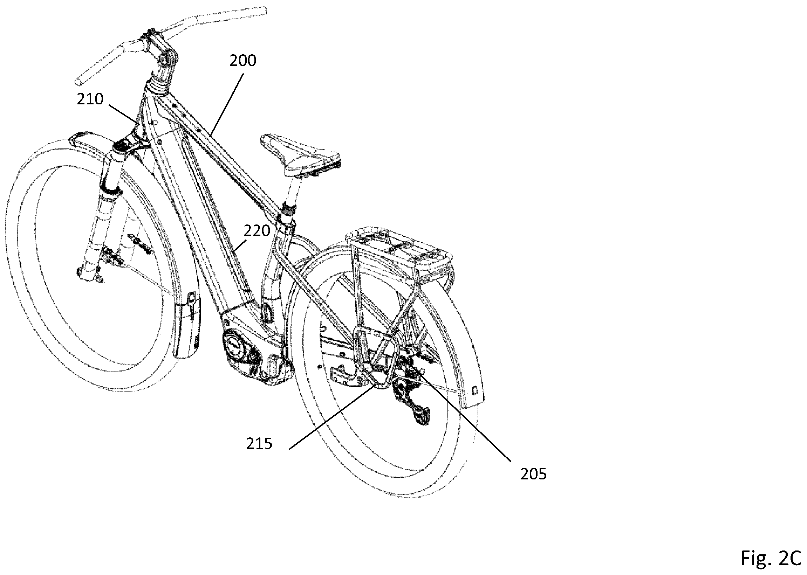

Fig. 2A is a side perspective view of a sports utility bicycle with various improvements in accordance with an illustrative embodiment. Fig. 2B is a top perspective view of the sports utility bicycle of Fig. 2A in accordance with an illustrative embodiment. Fig. 2C is a rear perspective view of the sports utility bicycle of Fig. 2A in accordance with an illustrative embodiment. The dashed lines in Fig. 2A correspond to the various improvements, which include a detachable accessory bar 200, a split dropout 205, a head tube 210 with internal cable routing, a pair of D-wings 215 to support a water bottle, pannier, or other accessory, and a hexagonal down tube with an angled battery ejection opening 220. Each of these features is described in more detail below.

It is noted that while Fig. 2 depicts a plurality of features incorporated onto the utility bicycle, it is to be understood that any combination of features (including a single feature) may be used on the utility bicycle. For example, in one embodiment, the utility bicycle may include just the detachable accessory bar 200, and none of the other features described herein. In another embodiment, the utility bicycle may include just the split dropout 205 and none of the other features described herein, just the head tube 210 with internal cable routing and none of the other features described herein, just the pair of D-wings 215 to support an accessory and none of the other features described herein, or just the hexagonal down tube with angled battery ejection and none of the other features described herein. Alternatively, the utility bicycle may include any two of the features described herein (e.g., the detachable accessory bar 200 and the internal cable routing), any three of the features described herein (e.g., the detachable accessory bar, the pair of D-wings 215, and the split dropout 205), any four of the features described herein (e.g., the pair of D-wings 215, the split dropout 205, the hexagonal down tube with angled battery ejection, and the head tube 210 with internal cable routing), or all five of the features described herein.

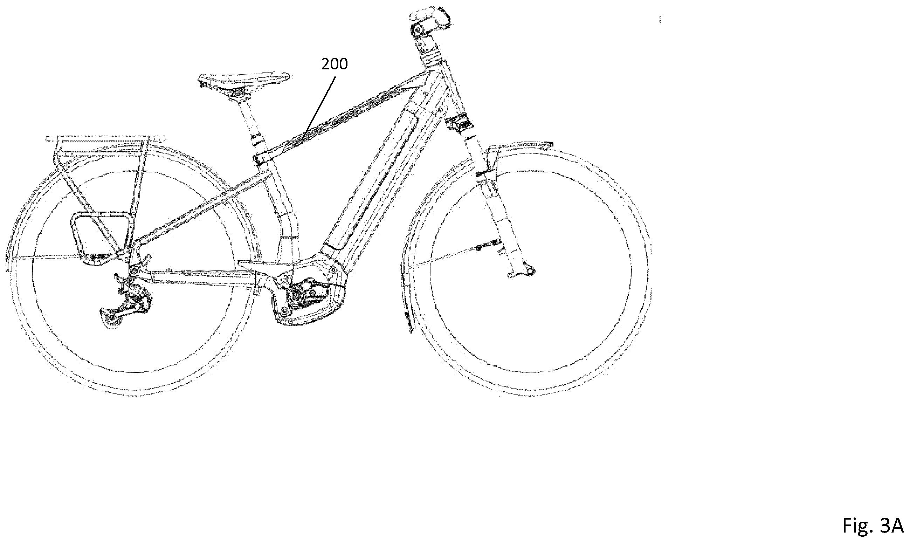

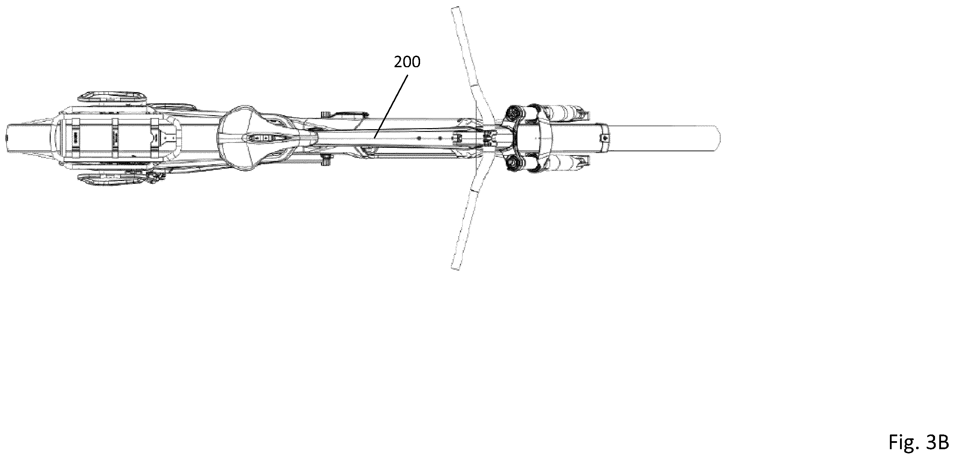

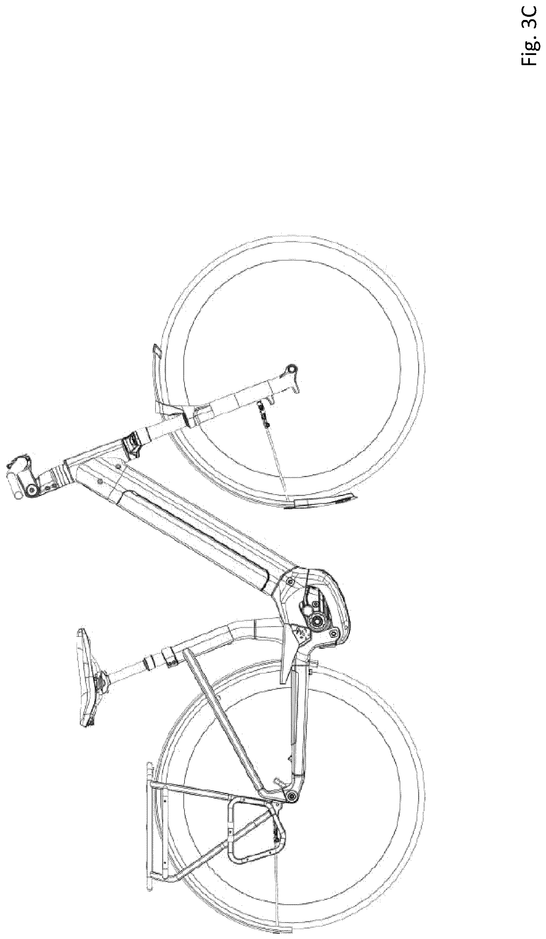

Fig. 3A is a side view of a bicycle having a detachable accessory bar 200 mounted thereto in accordance with an illustrative embodiment. Fig. 3B is a plan view of the bicycle having the detachable accessory bar 200 mounted thereto in accordance with an illustrative embodiment. Fig. 3C is a side view of the bicycle having the detachable accessory bar removed therefrom in accordance with an illustrative embodiment. As shown, the detachable accessory bar 200 mounts to the bicycle as a top tube, allowing the bicycle to be configured as either a low step bicycle or a step over bicycle.

More specifically, the detachable accessory bar (AB) is mounted in the front triangle of a low step bicycle, to increase its compatibility with a wide variety of accessories and objects. In an illustrative embodiment, the detachable accessory bar includes a rail with multiple slots and adjustable mounts, for the rider to attach multiple objects and accessories with the help of screws, nuts, and/or straps. The detachable AB is placed where a traditional top tube would sit, mounted between the seat tube and the down tube (and/or the head tube) with floating elastomeric interfaces, to accommodate for eventual frame deflection. The interface at the seat tube can compensate for the difference in length between frame sizes, covering the complete range of frame sizes with one single set of parts.

Low step bicycle frames are structurally sound without the need of a top tube. The difference between such a low step frame style and a step over frame is therefore mainly of cosmetic nature. As a result, in addition to its main function as an accessory interface, the detachable AB also has a very convenient frame consolidating aspect in that it eliminates the need for a separate step over frame to be produced, thereby reducing the need to manufacture such a different frame.

As discussed, the detachable accessory bar enables rapid conversion of a low step bicycle frame into a stepover bicycle frame, thereby reducing the need to manufacture 2 different bicycle frames and resulting in stock keeping unit (SKU) reduction. In an illustrative embodiment, a single detachable accessory bar can also be sized to fit both small frame bicycles and large frame bicycles. The detachable accessory bar can also include a cover that can be provided in different lengths to accommodate the different sizes (e.g., small and large) of bicycle frames. The proposed detachable accessory bar has limitless mounting arrangements to form the front triangle of the bicycle frame. In an illustrative embodiment, the detachable accessory bar also includes a functional rail profile on a bottom side thereof. The detachable accessory bar can be used in combination with the battery eject system described herein to provide more space for mounting accessories with less chance of interference. In some embodiments, the detachable accessory bar includes slots on the side of the bar for fixation of a strap, cord, etc. The detachable accessory bar can have holes with a 64 millimeter (mm) pitch on top of the accessory bar towards the head tube for attachment of a top tube bag or other accessory. Alternatively, a different pitch may be used, such as 50 mm, 60 mm, 70 mm, etc. Additionally, the straight mounting surface of the detachable accessory bar makes mounting of accessories easier.

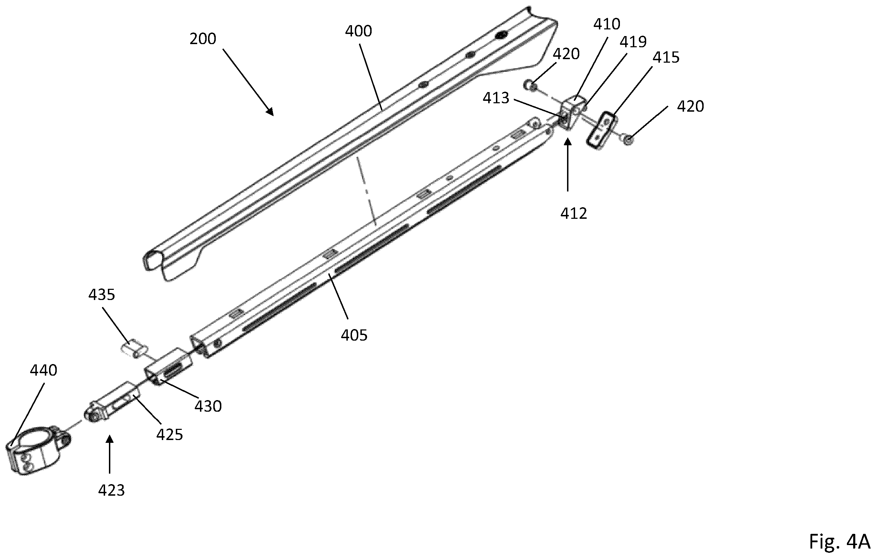

Fig. 4A is an exploded view depicting components of the detachable accessory bar 200 in accordance with an illustrative embodiment. In an illustrative embodiment, the detachable accessory bar is mounted between the seat tube and the down tube via two floating interfaces to accommodate for frame flexibility and movement. In alternative embodiments, the detachable accessory bar 200 can be mounted to the head tube instead of the down tube. In another alternative embodiment, the detachable accessory bar 200 may be mounted to both the head tube and the down tube. For example, at least a portion of the front decoupler and the rear decoupler of the accessory bar can be made from thermoplastic polyurethane (TPU) or another flexible material to enable flexibility and movement of the bicycle frame.

The detachable accessory bar 200 includes a cover 400 that mounts to the accessory bar to provide an aesthetically pleasing surface that looks like a standard top tube. For example, the cover 400 can have an appearance that matches the down tube, seat tube, head tube, etc. of the bicycle frame. The cover 400 is plastic in one embodiment, although the cover 400 can be made from aluminum, carbon, etc. in other embodiments. The cover 400 mounts to a bar 405. Attached to a front end of the bar 405 is a front decoupling unit 412 that includes a front decoupler 410, a front decoupler riser 415, and fasteners 420 to secure the front decoupling unit to the front end of the bar 405 such that the bar 405 is able to pivot/rotate relative to the front decoupling unit 412. In one embodiment, the front decoupler 410 and the front decoupler riser 415 are made from TPU or another flexible material, and the fasteners 420 are made from aluminum or another inflexible material. Alternatively, different materials may be used for the components of the front decoupling unit 412. The front decoupling unit 412 mounts the detachable accessory bar 200 to the down tube of the bicycle. Specifically, a screw or bolt (or other fastener) is used to secure the front decoupling unit 412 to the down tube (or head tube). For example, the front decoupler 410 includes an opening 413 that is sized to receive a fastener and that extends through the front decoupler and aligns with another (threaded) opening in the down tube (and/or the head tube). Additionally, the front decoupler 410 includes a position pin 419 that is sized to mate with an opening in the down tube (or head tube). The front decoupler riser 415 similarly includes openings to allow the fastener and the position pin 414 to pass from the front decoupler 410 into the down tube (or head tube).

A rear decoupling unit 423 is used to mount a rear end of the detachable accessory bar 200 to the seat tube of the bicycle frame. The rear decoupling unit 423 includes a rear decoupler 425, a rear decoupler sleeve 430, a rear decoupler flip chip 435, and a seat collar 440. In one embodiment, the rear decoupler sleeve 430 and the rear decoupler flip chip 435 are made from TPU or another flexible material, and the rear decoupler 425 and the seat collar 440 are made from aluminum or another inflexible material. Alternatively, different materials may be used for the components of the rear decoupling unit 423. In an illustrative embodiment, the seat collar 440 mounts to the seat tube of the bicycle. The seat collar 440 includes an extension with an opening that receives a flange of the rear decoupler. The flange of the rear decoupler includes an opening that aligns with the opening of the seat collar extension, and one or more fasteners (e.g., the fasteners 420) can be placed through the opening in the extension and the aligned opening in the flange to secure the rear end of the accessory bar to the seat tube. This arrangement allows the accessory bar to pivot/rotate relative to the seat tube. As discussed in more detail below, positioning the rear decoupler flip chip 435 at a first orientation results in a first overall length of the accessory bar, and positioning the rear decoupler flip chip 435 at a second orientation (i.e., flipped over) results in a second overall length of the accessory bar, where the second length of the accessory bar is greater than the first length of the accessory bar. This allows the accessory bar to be mounted to bicycle frames of differing size.

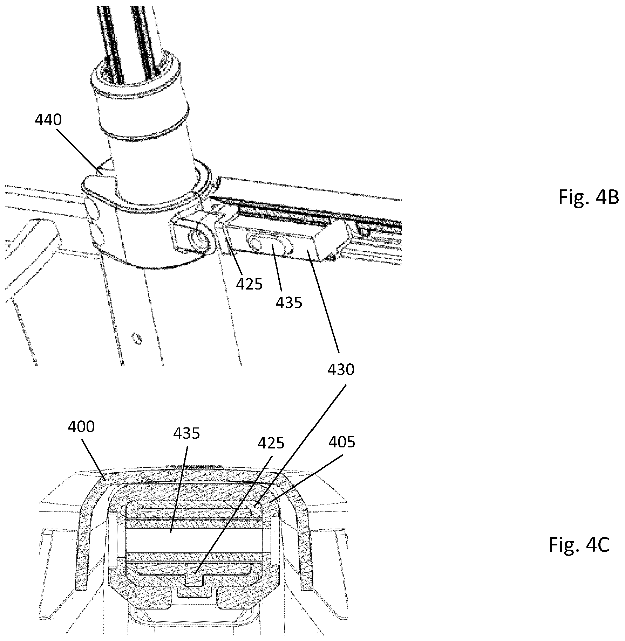

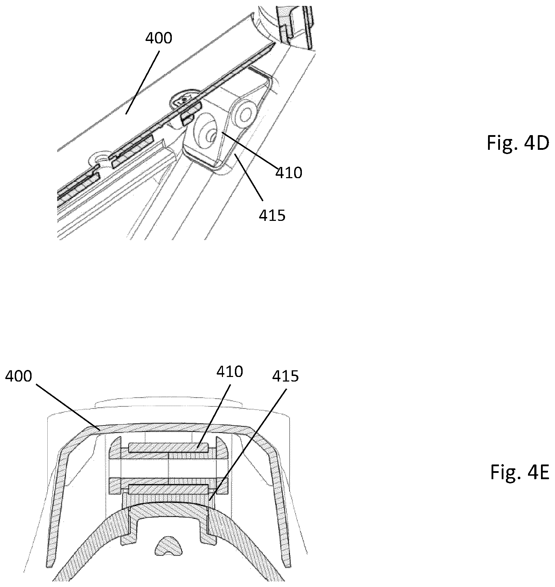

Fig. 4B is a close up view of the detachable accessory bar 200 mounted to the seat tube of a bicycle frame in accordance with an illustrative embodiment. Fig. 4C is an end cross-sectional view of a rear end of the detachable accessory bar 200 in accordance with an illustrative embodiment. Fig. 4D is a close up view of the detachable accessory bar 200 mounted to the head tube of a bicycle frame in accordance with an illustrative embodiment. Fig. 4E is an end cross-sectional view of a front end of the detachable accessory bar 200 in accordance with an illustrative embodiment. In an illustrative embodiment, any of the components of the detachable accessory bar can be made from aluminum, TPU, plastic, carbon fiber, rubber, etc.

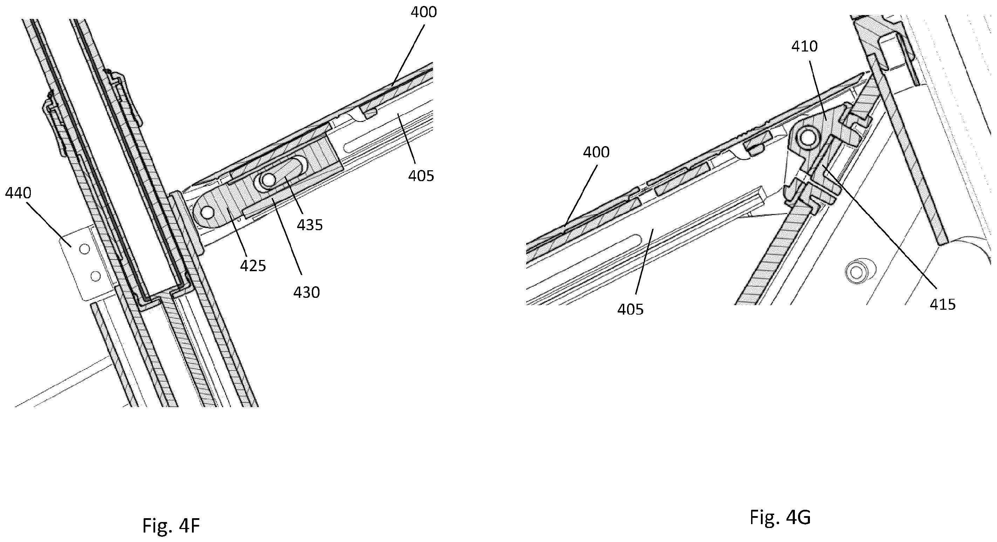

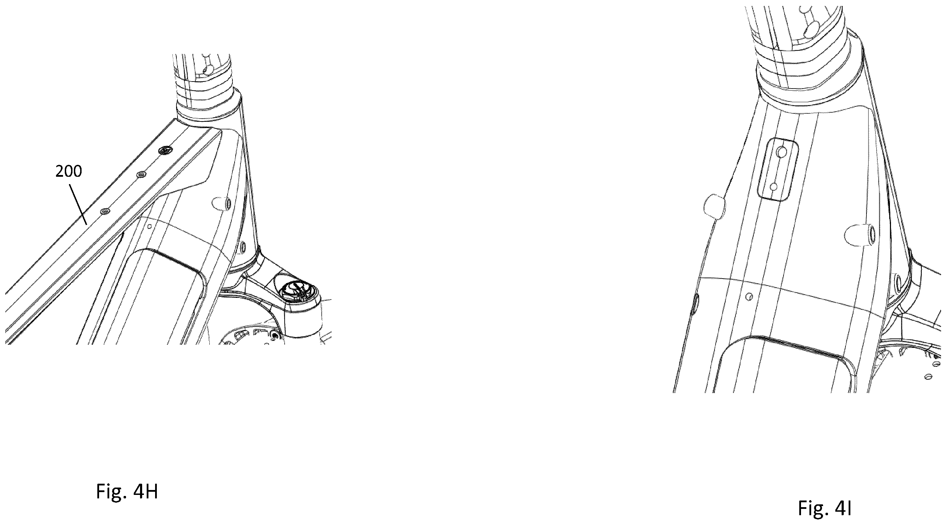

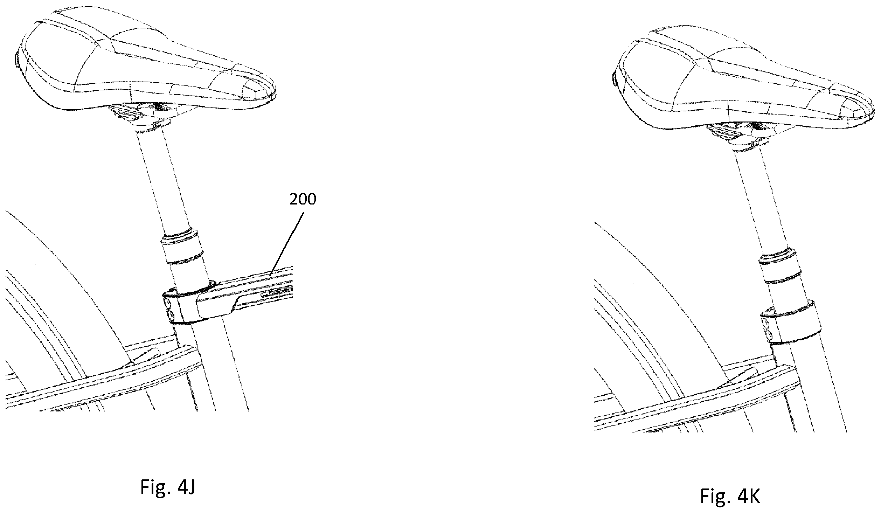

Fig. 4F is a side cross-sectional view of the rear decoupling unit mounted to a seat tube in accordance with an illustrative embodiment. Fig. 4G is a side cross-sectional view of the front decoupling unit mounted to a head tube in accordance with an illustrative embodiment. Fig. 4H is a close-up view of a head tube of a bicycle frame with a detachable accessory bar mounted thereto in accordance with an illustrative embodiment. Fig. 4I is a close-up view of the head tube of the bicycle frame with the detachable accessory bar removed from the frame in accordance with an illustrative embodiment. Fig. 4J is a close-up view of a seat tube of a bicycle frame with a detachable accessory bar mounted thereto in accordance with an illustrative embodiment. Fig. 4K is a close-up view of the seat tube of the bicycle frame with the detachable accessory bar removed from the frame in accordance with an illustrative embodiment.

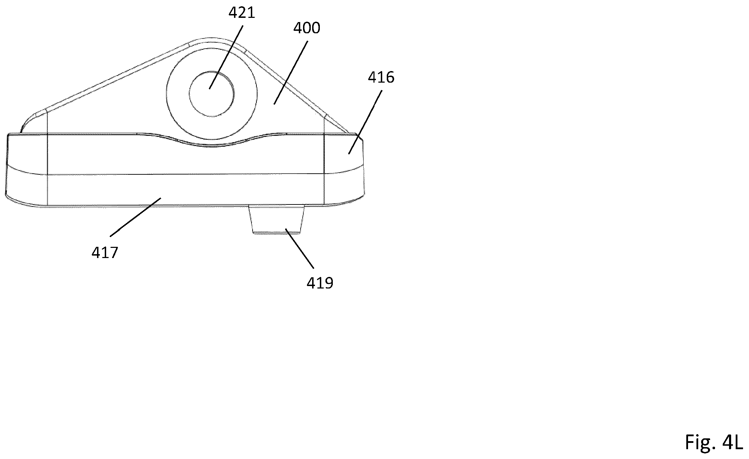

Fig. 4L is a side view of the front decoupling unit in accordance with an illustrative embodiment. As shown, the front decoupling unit includes the front decoupler 410. The front decoupling unit includes a first front decoupler riser 416 and a second front decoupler riser 417. The front decoupling unit with just the first front decoupler riser 416 can be used for smaller frame bicycles, and the front decoupling unit both the first front decoupler riser 416 and the second front decoupler riser 417 can be used for larger frame bicycles. In one embodiment, the second front decoupler riser 417 adds an additional 3.5 mm of rise to the unit. Alternatively, the second front decoupler riser 417 may add a different distance such as 3 mm, 4 mm, 5 mm, etc. In another embodiment, the system may instead utilize a first decoupler riser that is used for small frames and a single, larger second decoupler that is used for large frames. The position pin 419 extends from a bottom of the front decoupler risers and is received by an opening in the down tube (or head tube) and used to align the front decoupling unit with the down tube (or head tube). The front decoupling unit also includes an opening 421 through which one or more fasteners are used to secure the front decoupling unit to the accessory bar 405. This mounting arrangement enables the accessory bar 405 to pivot/flex with the rest of the bicycle frame.

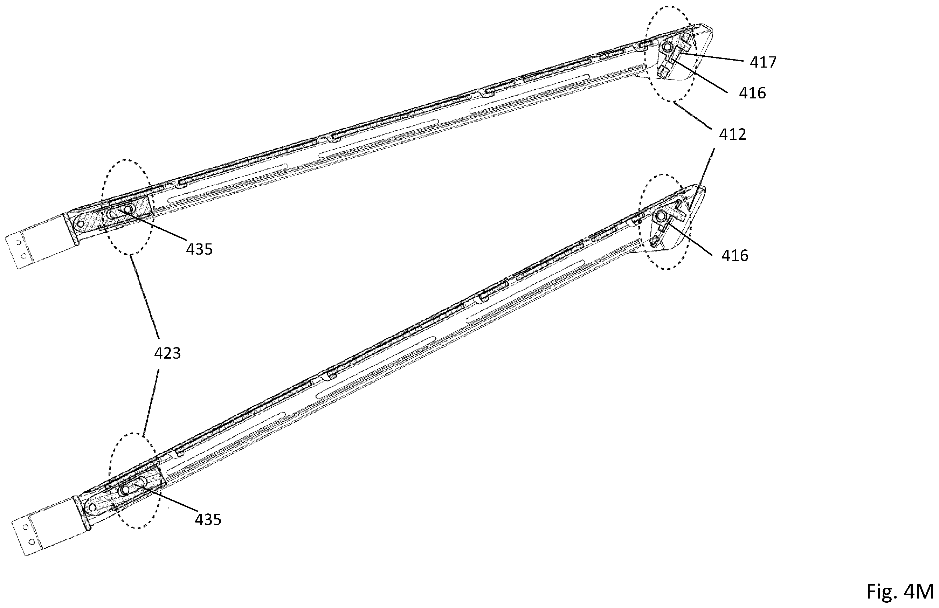

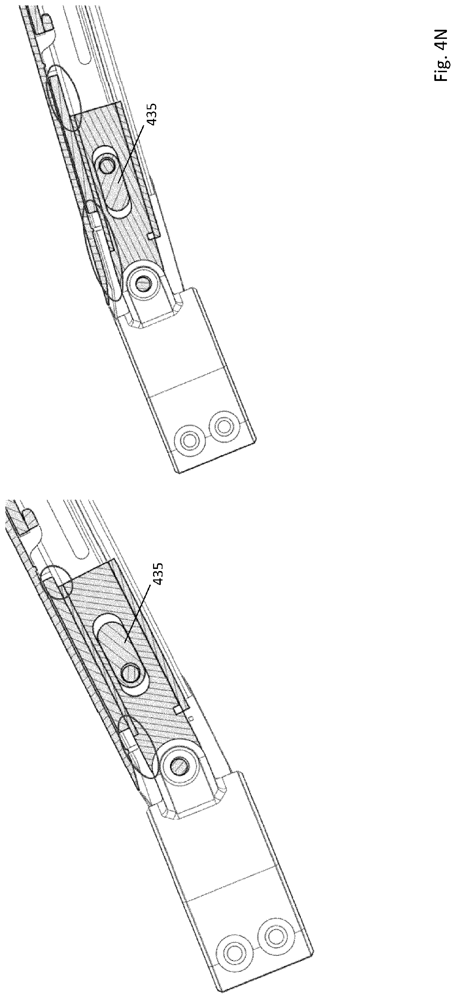

Fig. 4M (upper) shows the detachable accessory bar configured for a large bicycle frame and (lower) the detachable accessory bar configured for a small bicycle frame in accordance with an illustrative embodiment. In the large frame configuration (upper), the front decoupling unit includes both the first front decoupler riser 416 and the second front decoupler riser 417 to accommodate the larger frame shape. Alternatively, a single (i.e., thicker) front decoupler riser may be used. Also in the large frame configuration, the rear decoupler flip chip 435 has a first orientation that extends the overall length of the detachable accessory bar for a larger bicycle frame. In the small frame configuration (lower), the rear decoupler flip chip 435 has a second orientation that is a 180 degree flip relative to the first orientation. This second orientation decreases the overall length of the detachable accessory bar such that it fits the smaller bicycle frame. Also in the small frame configuration, the front decoupling unit includes only the first front decoupler riser to accommodate the smaller bicycle frame. Fig. 4N is a close-up depicting the rear decoupler flip chip 435 in a first (compressed) position for a smaller bicycle frame (left image) and in a second (extended) position for a larger bicycle frame (right image) in accordance with an illustrative embodiment. In Fig. 4N, circles/ovals are used to depict how flipping of the rear decoupler flip chip 435 changes the position of the rear decoupling unit relative to the end of the detachable accessory bar, resulting the compressed (left) and extended (right) configurations.

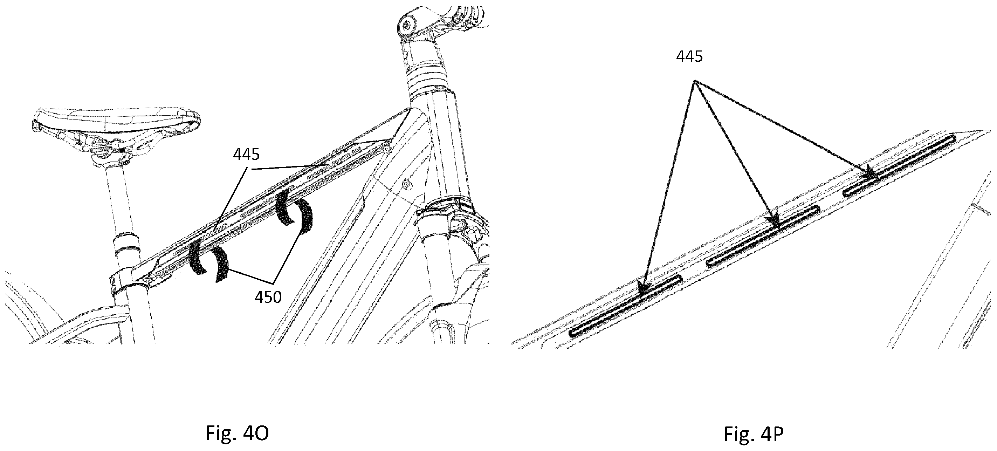

Fig. 4O is a side view of a mounted detachable accessory bar with side slots 445 in accordance with an illustrative embodiment. Fig. 4P is a close-up view of the side slots 445 in the detachable accessory bar in accordance with an illustrative embodiment. In an illustrative embodiment, the side slots 445 are through slots (or openings) that extend laterally from one side of the accessory bar to the other side of the accessory bar. The side slots 445 are sized to receive straps 450 that can be used to mount accessories to a top of the accessory bar, a bottom of the accessory bar, etc. The straps 450 can be Velcro^{®}, ratchet straps, tie straps or cords, etc.

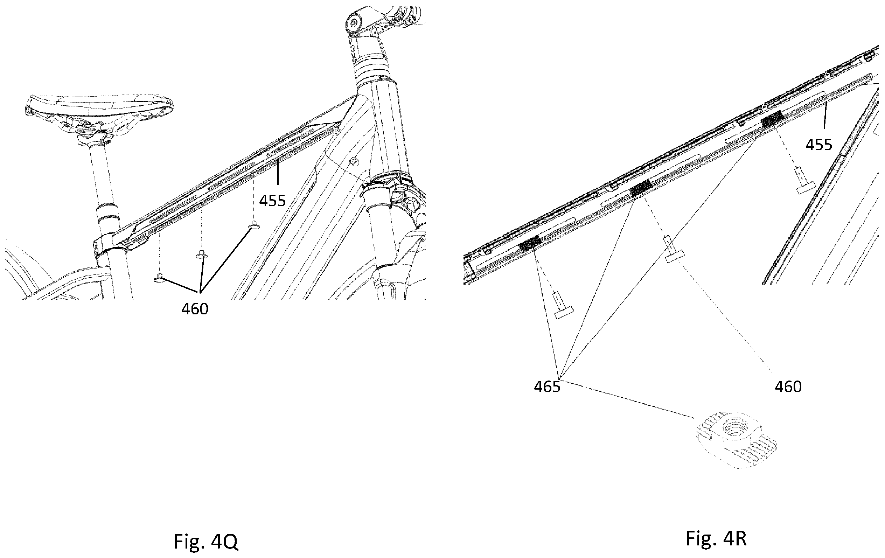

Fig. 4Q is a bottom perspective view of a mounted detachable accessory bar showing a bottom groove 455 in accordance with an illustrative embodiment. The bottom groove 455 can extend an entire length of the accessory bar, or along just one or more portions of the accessory bar, depending on the embodiment. As shown, fasteners (e.g., screws or bolts) 460 can be threaded into the bottom groove 455 to support accessories thereon. Fig. 4R is a close-up view depicting fasteners 460 that mate with nuts 465 embedded within the accessory bar in accordance with an illustrative embodiment. In an illustrative embodiment, the nuts 465 are t-shaped nuts with wings that rest on an inner surface of the accessory bar such that an opening in the nut 465 aligns with the bottom groove 455. In another illustrative embodiment, the nuts 465 can slide along the bottom groove 455 such that the user can control the position of any accessories mounted to the bottom groove 455 using the nuts 465.

Thus, the proposed detachable accessory bar serves multiple purposes, included being detachably mounted in the front triangle of a low step bicycle frame to create a men's step over frame, without having to manufacture two different frames. The detachable accessory bar is extendable and can therefore fit both small and large bicycle frames. Specifically, the length can be adapted by pulling out a rear decoupler (i.e., flip chip) and turning it around to form an extension and/or by using different sizes of front decoupler risers. The detachable accessory bar also includes an aesthetic cover, sized in accordance with the frame size, that can be added to hide the functional extrusion and make it look more like a traditional top tube. The accessory bar can have an aluminum profile in the form of a straight functional sliding rail with side slots. Any product (bags, cages, etc.) can be mounted to the accessory bar via bolt(s)/screw(s) and nuts. The extrusion rail of the accessory bar allows mounting of accessories through using a strap via the side slots. A 64 millimeter (mm) pitch of threaded holes on top of the accessory bar is used for mounting top tube bags, an extender, and other accessories. The accessory bar is fixated on the seat tube with a proprietary seat post clamp. In the low step arrangement, a clamp without an interface to the accessory bar is placed such that there is no visible AB interface in the low step frame execution. The front decoupler can be mounted into one threaded hole plus one threaded hole of a 64 mm pitch of for mounting next to the head tube. Alternatively, a different mounting arrangement may be used.

In another illustrative embodiment, the proposed sport utility bicycle includes a split dropout for a universal derailer hanger (UDH). The proposed dropout includes a belt split opening with only one parting line, and can be used for UDH and other derailer systems. Using the proposed split dropout, no belt split link and screws are needed since the UDH adapter and axle are holding two male-to-female nesting dropout components together. An opening in the dropout is formed by temporarily bending the seat stay and chain stay away from each other in order to be able to loop out the belt (or chain). The dropout also includes an interlocking feature in which two halves of the dropout mate in way that prevents rotation/displacement (e.g., nesting male and female halves). Conversely, a traditional belt split in the seat stay or chain stay requires extra welding steps of interface pieces, a separate linking piece and screws such that 2 parting lines are visible to the user. The proposed split dropout solution simplifies manufacturing and complexity, and improves aesthetics.

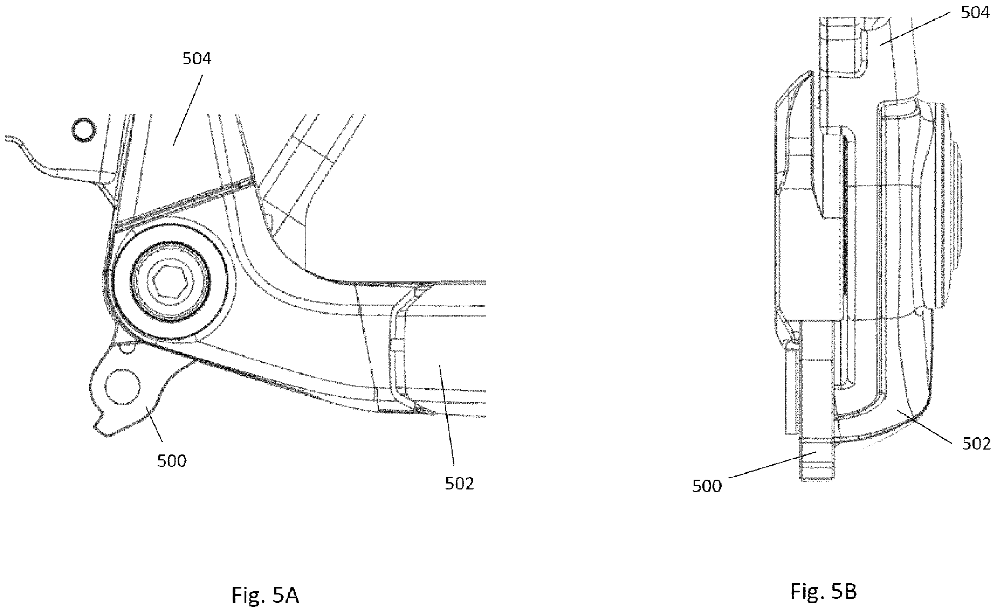

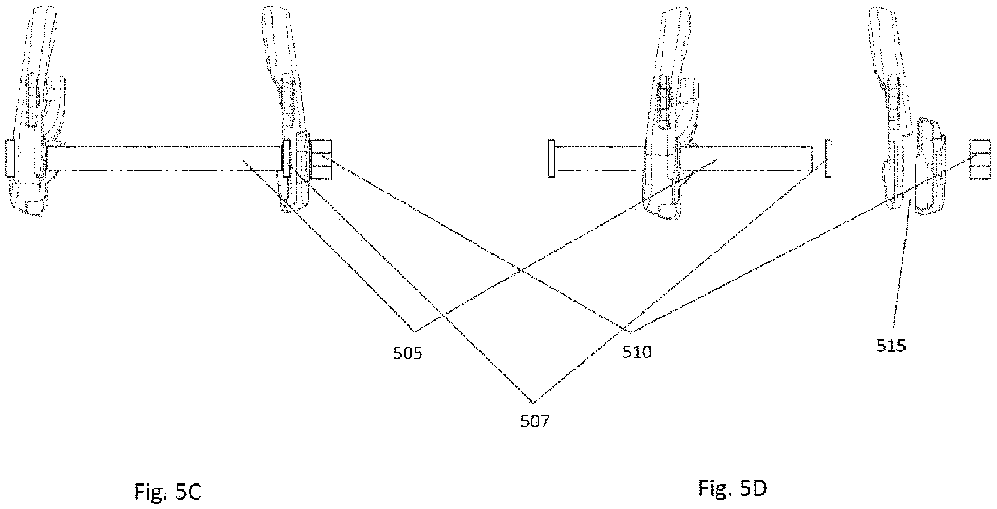

Fig. 5A is a side view of an assembled split dropout in accordance with an illustrative embodiment. Fig. 5B is a rear view of an assembled split dropout in accordance with an illustrative embodiment. As shown, a derailer hanger 500 is mounted to the split dropout at a junction of a chain stay 502 and a seat stay 504. Fig. 5C is a rear view of the split dropout with a mounted axle 505 in accordance with an illustrative embodiment. Fig. 5D is a rear view of the split dropout showing the formed opening 515 that allows for a looped belt or chain to be mounted in accordance with an illustrative embodiment. The split dropout includes a compression ring 507 that mounts to the axle 505. The compression ring 507 is used to prevent lateral movement of the dropout along the axle. The split dropout also includes a nut 510 that secures the dropout to the axle 505. As shown in Fig. 5D, removal of the nut 510 allows the axel 505 to be slid out from one side (i.e., the right side in Fig. 5D) of the dropout. Separation of components of the dropout forms the opening 515 to receive a looped belt or chain without having to open/break the looped belt or chain.

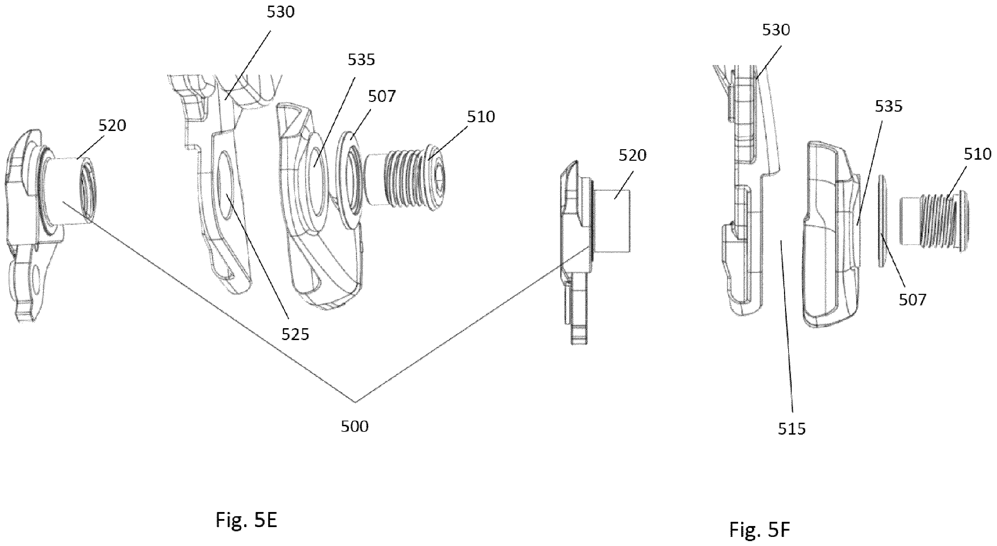

Fig. 5E is rear perspective exploded view of the split dropout in accordance with an illustrative embodiment. Fig. 5F is a rear exploded view of the split dropout in accordance with an illustrative embodiment. The dropout includes a derailer hanger 500 that has a cylindrical extension 520 with internal threads. A rear end of the cylindrical extension 520 receives the axle 500, and the front end is sized to fit through an opening 525 formed in a derailer 530 and also through an opening formed at a junction 535 of the seat stay and chain stay. The nut 510 and the compression ring 507 are used to secure the components of the split dropout to one another and to the axle 505. Specifically, the nut 510 threads into the cylindrical extension 520. As shown, an interior surface 540 of the junction 535 is sized and shaped to mate with an exterior surface 545 of the derailer 530 such that the derailer 530 is unable to rotate relative to the junction 535 and vice versa. By removing the nut 510 and separating the junction 535 from the derailer 530, the opening 515 is formed, thereby allowing insertion or removal of a looped belt/chain without having to open up or otherwise form a break in the belt/chain.

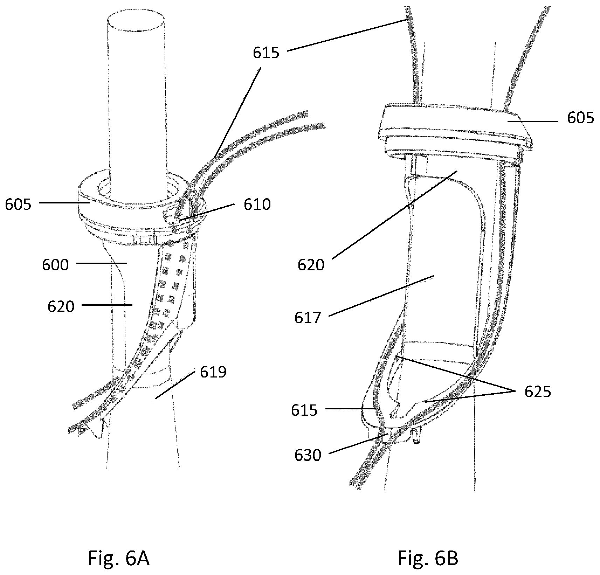

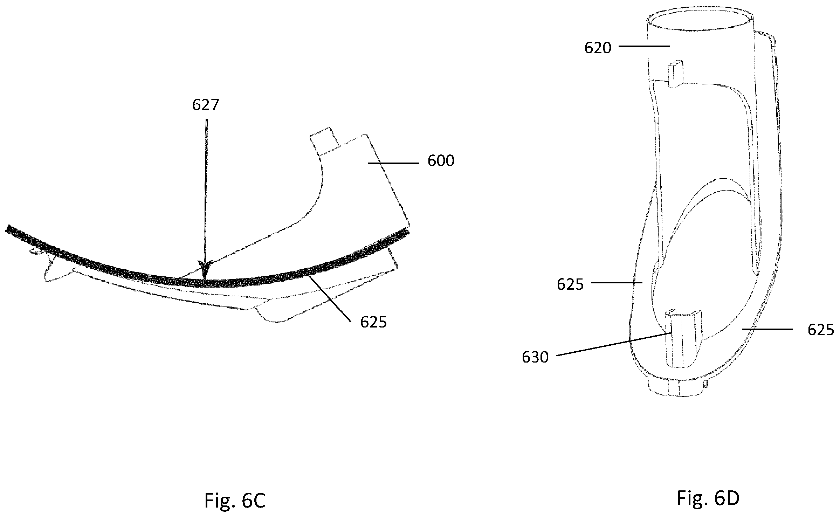

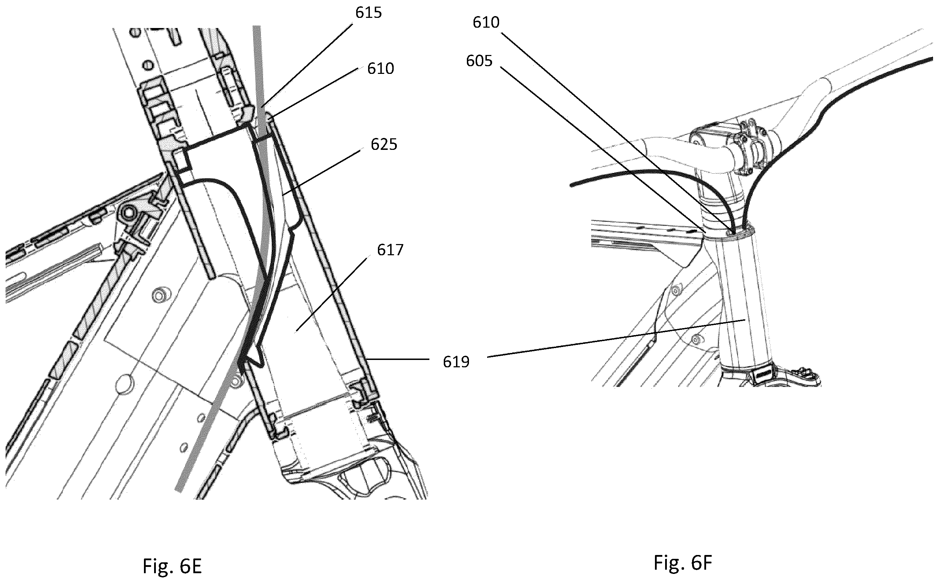

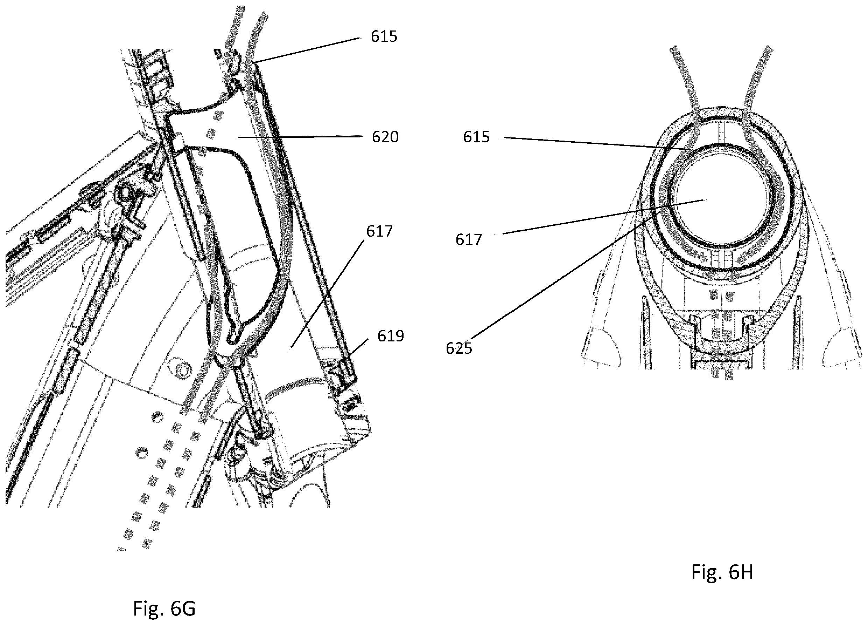

The proposed sport utility bicycle can also include a cable routing system. Fig. 6A is a partial cross-sectional view depicting a cable routing collar 600 in accordance with an illustrative embodiment. Fig. 6B is a perspective view of the cable routing collar 600 mounted to a steerer tube in accordance with an illustrative embodiment. Fig. 6C is a side view of the cable routing collar 600 in accordance with an illustrative embodiment. Fig. 6D is a rear view of the cable routing collar 600 in accordance with an illustrative embodiment. Fig. 6E is a cross-sectional side view of a mounted cable routing collar 600 in accordance with an illustrative embodiment. Fig. 6F is a perspective view of the cable routing collar 600 mounted within a head tube in accordance with an illustrative embodiment. Fig. 6G is a cross-sectional perspective view of the cable mounting collar 600 in accordance with an illustrative embodiment. Fig. 6H is a cross-sectional plan view of a mounted cable routing collar 600 in accordance with an illustrative embodiment.

In an illustrative embodiment, the cable routing collar 600 is a plastic component that mounts inside the headtube around the steerer tube. Alternatively, the cable routing collar can be made from aluminum, carbon fiber, etc. The collar guides the cables from cable entry at the front of the head tube, around the steerer tube, and into the down tube of the bicycle frame. The cable routing collar 600 provides an easy method of cable routing that protects both the steerer tube and the cables from extensive wear. The proposed cable routing collar 600 is bidirectional in that cables can be inserted from the top of the head tube or from the down tube into the head tube. In another illustrative embodiment, the cable routing collar 600 has a positioning interface and is mounted by first aligning the collar with the top bearing cup of the steerer tube and then pressing the collar into the top bearing cup. Given the gentle curvature of the collar, the cables exit the collar and the top bearing cup under a natural, unforced angle. Additionally, the cables form a large bend from the bottom of the down tube to the entry/exit of the collar, which helps maintain good shifting performance because the friction is reduced.

As shown, the cable routing collar 600 mounts to a bearing cup top 605 of the steerer tube. The bearing cup top 605 includes an opening 610 to receive one or more cables 615. The cables 615 can be brake cables, power cables, data cables, shifting cables, etc. Attached to the bearing cup top 605 is a partially cylindrical body 620 that mounts over the steerer tube 617 (within the head tube 619) of the bicycle. Attached to the partially cylindrical body are a pair of cable tracks (i.e., one on each side of the collar) 625 that receive the cables and guides them from the opening 610 to a cable divider 630, at which point the cables are separated and directed out of the cable routing collar 600 and into a tube, such as the down tube. The cable divider 630 can include a pair of openings to receive and separate the cables 615 as they exit the collar. The cable tracks 625 can be flat surfaces, grooves, slots, etc., depending on the embodiment. As shown in Fig. 6C, the cable tracks 625 are curved along their length to prevent kinking or other damage to the cables 615. Specifically, the arrow 627 in Fig. 6C depicts the gentle radius of curvature of the cable tracks, which facilitates easy cable routing with minimal risk of damaging the cables due to kinks, etc.

Thus, the proposed cable routing system utilizes a top bearing cup, expanded head tube, and a cable routing collar mounted within the head tube and around the steerer tube. Internal cable routing runs along the bearing cup with the bearing cup pressed in to the routing collar and having a cable inlet on top of the head tube. The proposed head tube shape makes space for cable entry, and it is noted that the same effect could be achieved with an asymmetric mounted fork/bearing in relation to the head tube. The cable entry opening is able to host all necessary cables. This solution eases the cable installation and offers a simplified bearing replacement, without demounting brake cables and performing a bleeding process, since the cables do not run through bearings like in most common head set systems today. The proposed head tube can have an oval shape, expanded to the front in order to make space for cable entry. The head tube includes a pressed in bearing cup with a cable entry slot that enables cables to run through the bearing cup without coming into contact with the bearings.

The proposed sport utility bicycle can also include a pair of rack wings mounted to a rear bicycle rack, the seat stays, and/or to the junction of the seat stays and the chain stays. The rack wings are used to support accessories such as water bottles, panniers, bags, tools, lights, etc. In an illustrative embodiment, the rack wings have a capital D shape, but can alternatively have a different shape such as rectangular, square, circular, triangular, etc.

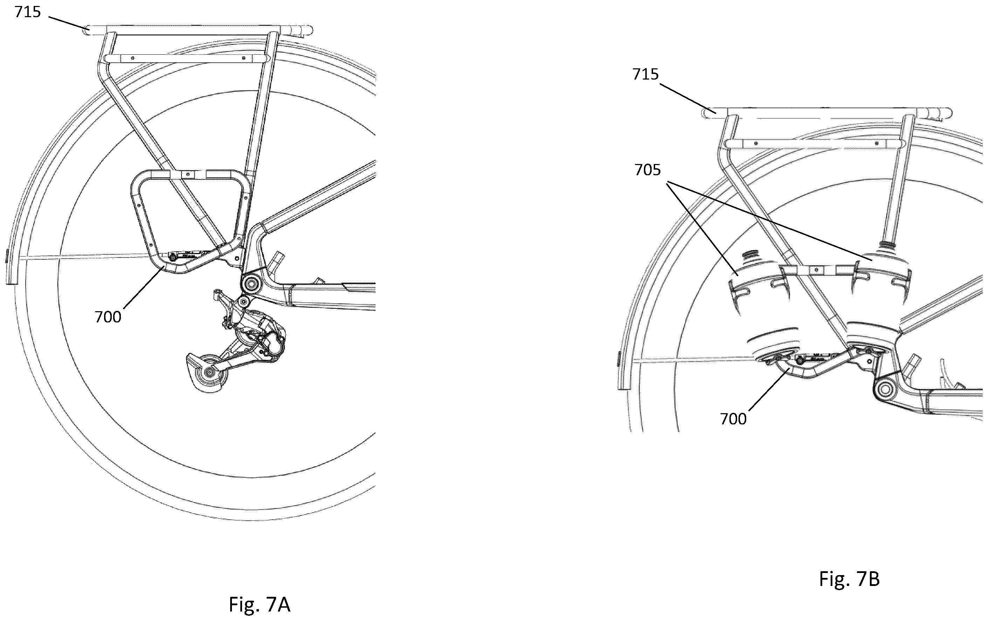

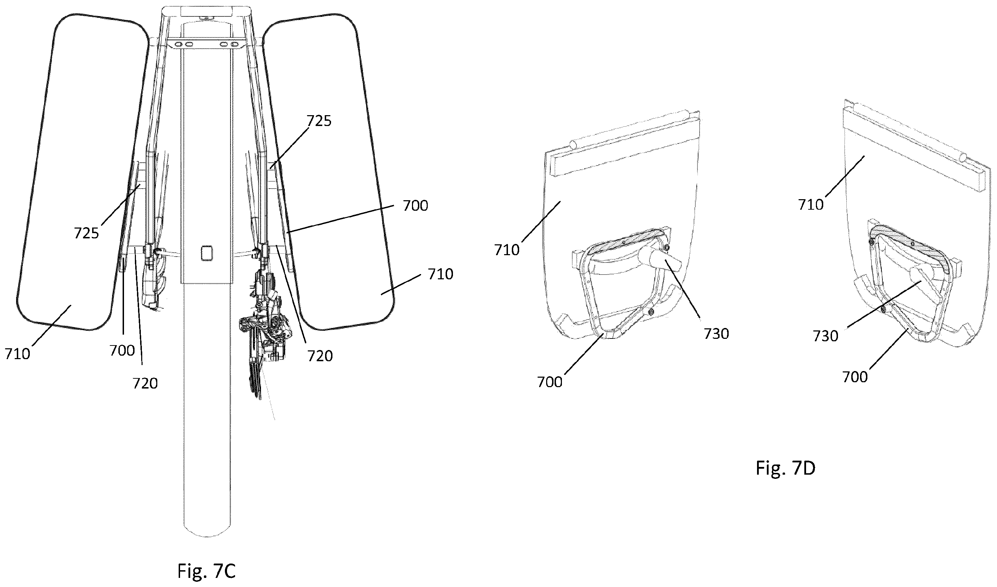

Fig. 7A is a side view of a rack wing 700 mounted to a bicycle in accordance with an illustrative embodiment. Fig. 7B is a side view of the rack wing with a pair of water bottle accessories 705 mounted thereto in accordance with an illustrative embodiment. Fig. 7C is a rear view showing panniers 710 mounted to a pair of rack wings 700 in accordance with an illustrative embodiment. Fig. 7C shows the rack wings 700 mounted to a bicycle rack 715 such that the rack wings are angled relative to the rear wheel. Specifically, lower mounting extensions 720 extend from the bicycle rack 715 to a bottom portion of the rack wings and upper mounting extensions 725 extend from the bicycle rack 715 to an upper portion of the rack wings. The lower mounting extensions 720 are longer than the upper mounting extensions 725. As a result, the rack wings are angled such that the bottom portion of the rack wings is farther away from the rear wheel of the bicycle than the upper portion of the rack wings. This induced angle helps to keep accessories away from both the rear wheel and derailer system. Fig. 7D is an inside view depicting the interaction of pannier buckles 730 with the rack wings 700 in accordance with an illustrative embodiment.

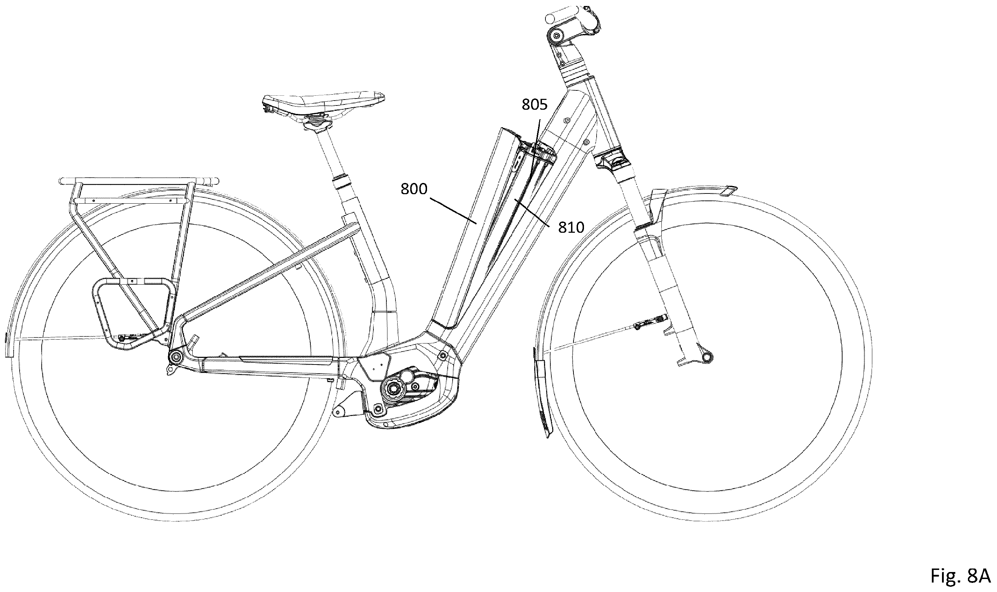

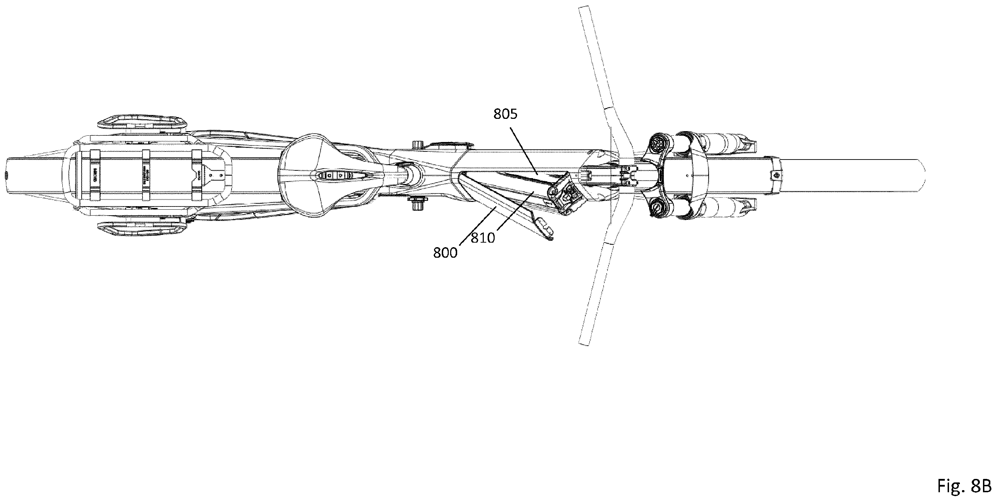

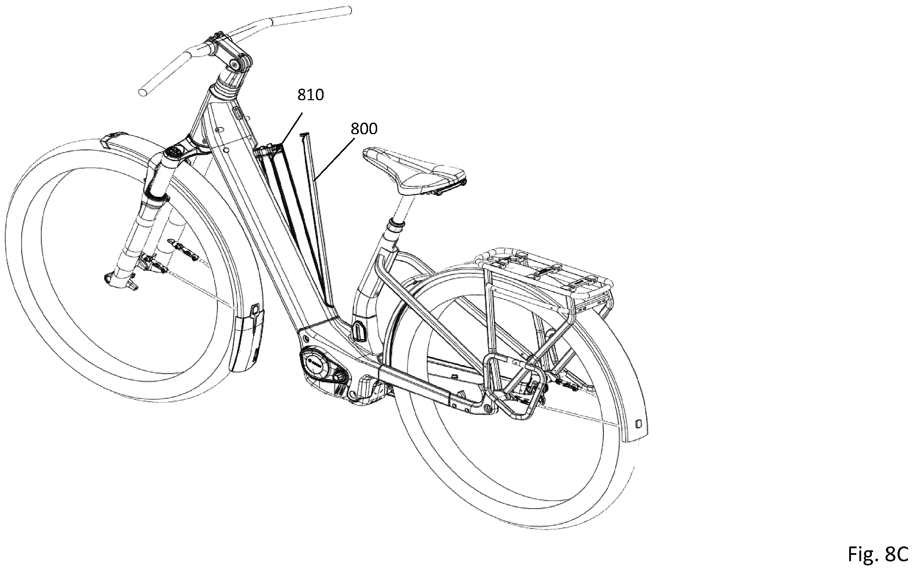

In another illustrative embodiment, the utility sport bicycle can be an electric bicycle that has an angled battery ejection system. Specifically, the battery can be mounted in the down tube such that the battery ejects from a location that is between the top of the down tube and a side of the down tube. Fig. 8A is a first side view of a bicycle with an angled battery ejection system in accordance with an illustrative embodiment. Fig. 8B is a plan view of the bicycle with the angled battery ejection system in accordance with an illustrative embodiment. Fig. 8C is a second side view of the bicycle with the angled battery ejection system in accordance with an illustrative embodiment. As shown, a battery cover 800 mounts to the down tube, which is in the shape of a hexagon, at a 42 degree angle relative to a straight vertical line that extends through the down tube when the bicycle is in an upright position. Similarly, the opening 805 in the down tube is formed at the same angle, and the battery 810 exits through the opening 805 with a 42 degree trajectory relative to a straight vertical line that extends through the down tube. In alternative embodiments, a different angle may be used, such as 35 degrees, 40 degrees, 45 degrees, 50 degrees, etc.

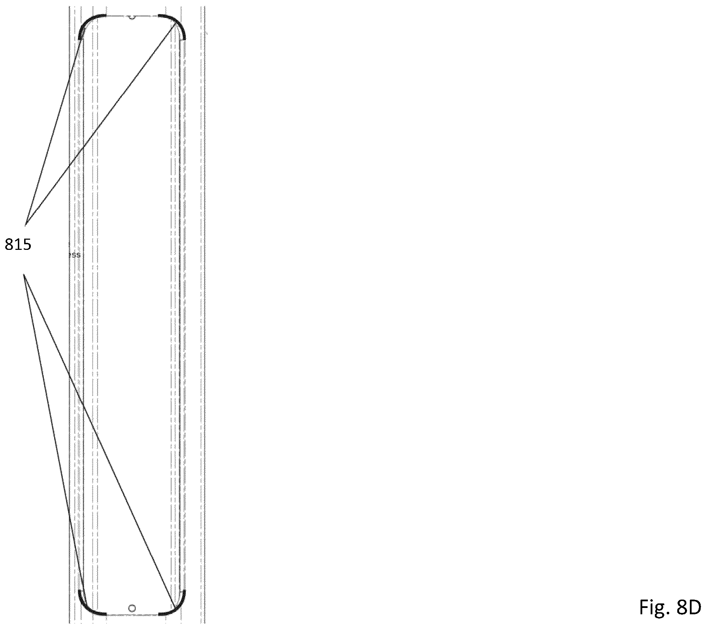

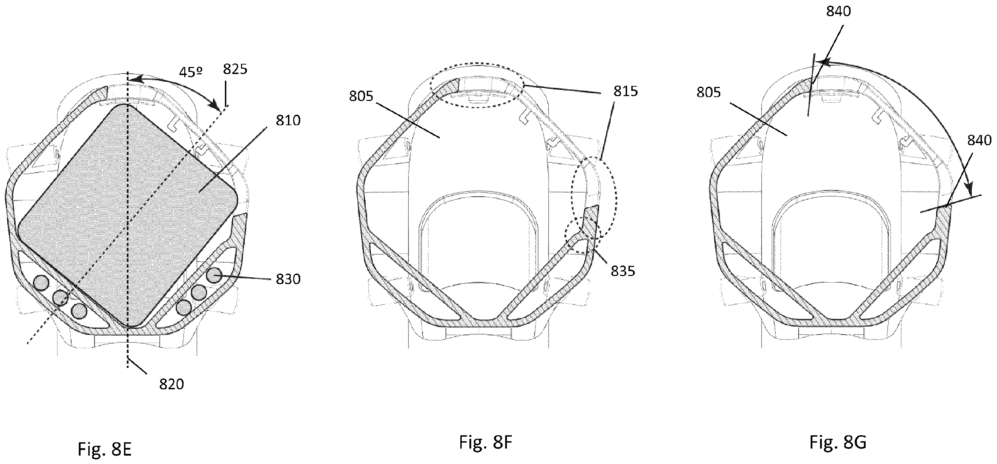

Fig. 8D is a view of the opening 805 in the down tube in accordance with an illustrative embodiment. As shown, the opening includes reinforced corners 815 (i.e., made from thicker material than the rest of the material used to form the opening) in order to provide additional strength and structural integrity to the down tube. The reinforced corners 815 are also curved to improve integrity. Fig. 8E is an end view of the opening 805 in the down tube with a battery mounted therein in accordance with an illustrative embodiment. For illustration purposes, a vertical dashed line 820 is included in Fig. 8E down the center of the down tube. It is noted that in Figs. 8E-8G the down tube is oriented in accordance with the bicycle being in an upright condition. A second dashed line 825 shows the trajectory that the battery takes when ejected from the opening 805. The trajectory is at a 42 degree angle relative to the vertical dashed line 820. Fig. 8E also depicts how the down tube accommodates running cables 830 adjacent to the battery 810 in separate compartments (i.e., channels) within the down tube.

Fig. 8F is an end view of the opening 805 in the down tube that depicts the reinforced corners 815 in accordance with an illustrative embodiment. Fig. 8F also depicts a kink 835 formed by the inner wall of the down tube that forms the opening 805. Fig. 8G is an end view of the opening 805 in the down tube that depicts how the edges 840 of the down tube that form the opening are angled in accordance with an illustrative embodiment. The edges that form the opening are angled to create a wider edge surface.

Thus, by turning the downtube 42 degrees (or a different angle such as 35 degrees, 40 degrees, 45 degrees, 50 degrees, etc.) the battery cover and downtube opening point partially upwards and are therefore easily accessible. With the bike on the kickstand the ejection system has the advantage that the cavity is facing to the user and the battery docking is easy to see when ejecting and installing the battery. Due to the orientation, gravity can be used to more easily place the battery in the frame and dockings. Additionally, the down tube is hexagonal, and the hexagon shape of the downtube is the result of adding cable channels under the battery volume in order to structurally stiffen the extrusion profile and provide space for the cables. The cables run through the cable routing collar, and are separated into left and right sets of cables by the cable divider 630 discussed above (i.e., such that the cables run in the two cable channels shown in Fig. 8E).

The word "illustrative" is used herein to mean serving as an example, instance, or illustration. Any aspect or design described herein as "illustrative" is not necessarily to be construed as preferred or advantageous over other aspects or designs. Further, for the purposes of this disclosure and unless otherwise specified, "a" or "an" means "one or more".

The foregoing description of illustrative embodiments of the invention has been presented for purposes of illustration and of description. It is not intended to be exhaustive or to limit the invention to the precise form disclosed, and modifications and variations are possible in light of the above teachings or may be acquired from practice of the invention. The embodiments were chosen and described in order to explain the principles of the invention and as practical applications of the invention to enable one skilled in the art to utilize the invention in various embodiments and with various modifications as suited to the particular use contemplated. It is intended that the scope of the invention be defined by the claims appended hereto and their equivalents.

## Claims

1. A sport utility bicycle comprising:
a frame that includes a down tube, a seat tube, and a head tube; and
a detachable accessory bar that mounts between the seat tube and the head tube or the down tube, wherein the detachable accessory bar includes a rear decoupling unit that mounts to the seat tube and a front decoupling unit that mounts to the down tube or the head tube.

2. The bicycle of claim 1, wherein the front decoupling unit includes a first front decoupler riser corresponding to a first bicycle frame, and a second front decoupler riser corresponding to a second bicycle frame, wherein the second bicycle frame is larger than the first bicycle frame.

3. The bicycle of claim 1 or 2, wherein the front decoupling unit includes a front decoupler that mounts to the down tube or to the head tube via one or more threaded fasteners.

4. The bicycle of claim 3, wherein the detachable accessory bar mounts to the front decoupler such that the detachable accessory bar is able to pivot relative to the front decoupling unit.

5. The bicycle of any preceding claim, wherein the front decoupling unit includes a position pin that extends from a bottom thereof.

6. The bicycle of claim 5, wherein the down tube includes an opening sized to receive the position pin.

7. The bicycle of any preceding claim, wherein the rear decoupling unit includes a collar that mounts around the seat tube.

8. The bicycle of claim 7, wherein the collar includes an extension that receives a portion of a rear decoupler, and wherein the rear decoupler is able to pivot relative to the collar.

9. The bicycle of any preceding claim, wherein the rear decoupling unit includes a flip chip, wherein a first mounting position of the flip chip results in a first length of the detachable accessory bar corresponding to a first size of bicycle frame, and wherein a second mounting position of the flip chip results in a second length of the detachable accessory bar corresponding to a second size of bicycle frame.

10. The bicycle of any preceding claim, wherein the detachable accessory bar includes a bar with a plurality of slots sized to receive straps for securing accessories to the detachable accessory bar.

11. The bicycle of any preceding claim, wherein a bottom of the detachable accessory bar includes a groove that is sized to receive winged nuts such that one or more fasteners can be used to secure an accessory to the detachable accessory bar.

12. The bicycle of any preceding claim, further comprising a cover that mounts to the detachable accessory bar, wherein the cover has an appearance that matches the down tube of the bicycle.

13. A method of forming a detachable accessory bar for a bicycle, the method comprising:
mounting a front decoupling unit to a first end of an accessory bar, wherein the front decoupling unit is configured to mount to a down tube or a head tube of a bicycle frame; and
mounting a rear decoupling unit to a second end of the accessory bar, wherein the rear decoupling unit is configured to mount to a seat tube of the bicycle frame.

14. The method of claim 13, further comprising forming a groove in a bottom of the accessory bar, wherein the groove is sized to receive winged nuts such that one or more fasteners can be used to secure an accessory to the accessory bar.

15. The method of claim 13 or 14, wherein the rear decoupling unit includes a flip chip, and further comprising positioning the flip chip at a first mounting position that results in a first length of the detachable accessory bar corresponding to a first size of bicycle frame or positioning the flip chip at a second mounting position that results in a second length of the detachable accessory bar corresponding to a second size of bicycle frame.
